# EUROPEAN PATENT APPLICATION

(11) **EP 4 331 841 A1**
(43) Date of publication of application: **06.03.2024**
(21) Application number: 23194477.8
(22) Date of filing: 31.08.2023
(51) Int. Cl.: B33Y 10/00, B29C 64/124, B33Y 70/00, C04B 35/111, C04B 35/14, C04B 35/18, C04B 35/486, C04B 35/565, C04B 35/632, C04B 35/634, C04B 35/638

(54) **A COMPOSITION FOR PREPARING A CERAMIC PRODUCT BY STEREOLITHOGRAPHY, A CERAMIC PRODUCT, AND A METHOD OF MANUFACTURING A CERAMIC PRODUCT**

(30) Priority: 31.08.2022 EP 22193224
(71) Applicant: FACT Industries OÜ, 13513 Tallinn (EE)
(72) Inventor: Aghayan, Marina, Tallinn (EE); Khachatryan, Hayk, Helsinki (FI); Ghaltaghchyan, Tsovinar, Yerevan (AM)
(74) Representative: Moosedog Oy

(57) **Abstract**

A composition for preparing a ceramic product by stereolithography, comprising a mixture of a first ceramic material and a second materials comprising a photopolymerizable resin, a photoinitiator, and a dispersant. A ceramic product comprising a first layer formed from the composition, polymerized by UV exposure; a second layer formed from the composition and deposited onto the polymerized first layer, polymerized by UV exposure; and one or more subsequent layers, each formed and polymerized in a manner consistent with the first and second layers, arranged according to a preset pattern of the ceramic product. The composition comprises

the first ceramic material 3% to 28% by volume;

the photopolymerizable resin 70% to 95% by volume;

the photoinitiator 3% to 28% by volume,

the dispersant 10% to 20% by volume.

## Description

### TECHNICAL FIELD

The present invention relates to the field of the fabrication of ceramic component, in particular ceramics with functional additives, by a 3D printing technique, in particular by stereolithography.

### BACKGROUND

SiC based ceramics attracted significant attention in the field of advanced ceramics due to their superior properties, such as low thermal expansion coefficient, high thermal conductivity and excellent mechanical strength, high resistance to corrosion and oxidation, wide bandgap, good thermal shock resistance, good chemical inertness and others.

Due to those unique properties SiC and composites based on SiC considered to be one of the best candidates for power electronics, composites and heterogenous catalyst supports, in tools and machinery where excellent wear-resistance is outermost important parameter. It is used in the areas of industrial control, power and renewable energy (solar & wind sector), reactors, smaller cooling solutions in the system design. SiC electronics also find applications in electric vehicles and hybrid electric vehicles, electric traction control, power supply units, photovoltaic applications, converters and inverters. Further application of the SiC is heat exchanger. Silicon carbide is chosen for such applications because of its high thermal conductivity, thermal resistance, and corrosion resistance. The high chemical resistance of ceramic materials also extends the use of heat exchangers to chemical processing devices such as chemical reactors. The initial investigation of the process for micro reactors is also discussed.

In general, the SiC and SiC based composite are consolidated by sintering method including pressureless sintering, hot-press, Spark plasma sintering (SPS), etc. In the SPS technique, densification is enhanced by the application of a pulsing electric field, combined with resistance heating and pressure. In order to imporve sinterability liquid phase is involved. It is reported that Liquid phase sintered silicon carbide (LPS-SiC) ceramics having remarkably high oxidation resistance in wet air.

The most important criteria for defining the performance of the SiC is its composition and phase structure. Impure and/or nonstoichiometric SiC, which should be more correctly referred to as SiC-based material rather than SiC, is often less stable in radiation environment than the pure and stoichiometric SiC. For example, the monolithic RB SiC severely degrades in strength during irradiation because of the extensive microcracking introduced due to differential swelling (volume expansion) between SiC and Si. However, such adverse effect may be minimized when the reduced amount of free silicon.

Next, the critical factors affecting the electrical conductivity of LPS-SiC ceramics include the SiC polytype, grain boundary structure, soluble atoms, porosity, and grain size. Until now, over 250 SiC polytypes have been reported. Each SiC polytype exhibits different electrical properties owing to differences in the stacking sequence and bandgap. For instance, 3C-SiC (β-SiC) and 6H-SiC (o-SiC) powders are the most widely available polytypes at present. Generally, bulks fabricated from β-SiC powder show a lower electrical resistivity (3.5 × 10-3-3.4 Ω cm) than those processed from α-SiC (5.4-1.2 × 1013 Ω cm). Important to mention, that in most cases, β → α phase transformation of SiC partially may occurs during sintering the β-SiC starting powder which typically leads to a lower electrical resistivity than that of the α-SiC powder under the same sintering conditions. This can deteriorate electrical properties of the final unit: hence leading to failure of device containing SiC-based component.

The next issue related with SiC sintering process is dopping issue. Dopants act as acceptors or donors in the SiC lattice. The ability to dope the SiC lattice is limited by the solid solubility limit. The soluble atoms in the SiC lattice include Al, B, Ga, Sc, N, P, Be, O, and V. Al, B, Ga, and Sc act as p-type dopants, whereas N and P act as n-type dopants in the SiC lattice. However, Be, O, and V tend to create deep levels within the bandgap, which can capture carriers, leading to a semi-insulating or insulating SiC. Because the sintering additives and sintering atmosphere often contain n- or p-type dopants, e.g., Al2O3, AlN, B, B4C, and Sc2O3 as additives and nitrogen as the sintering atmosphere, the dopant atoms are incorporated into the SiC lattice during the grain growth via a solution-reprecipitation mechanism. Typical examples are N-doping of the SiC grains during the sintering of SiC ceramics with Y2O3-Gd2O3 additives in a nitrogen atmosphere and Al doping during the sintering of SiC ceramics with AlN-Y2O3 additives in a nitrogen atmosphere. Thus, the careful selection of the sintering additive composition and sintering atmosphere is important for achieving the desired electrical resistivity in SiC ceramics.

Porous LPS-SiC ceramics show a substantially higher electrical resistivity than the dense LPS-SiC ceramics (Zhan *et al.,* 2001; Ihle *et al.,* 2006). For example, the electrical resistivity of the SiC ceramics increased from 0.10 to 1.41 Ω cm with increasing porosity from 38.8% to 42.2% when SiC was sintered with Al2O3-Y2O3 additives.

The LPS-SiC ceramics exhibited a tendency of increasing resistivity with decreasing grain size because of the grain boundary scattering of the carriers. Specifically, a LPS-SiC ceramic with an average grain size of 3.5 µm showed a higher electrical resistivity (5.2 × 10-2 Ω cm) than that with an average grain size of 5.5 µm (8.9 × 10-3 Ω cm) at RT.

As explained above, although traditional sintering methos are well optimized for sintering of SiC and fabricating compact detals with target mechanical performance, but there is clear issues linked with electrical performance.

The additive manufacturing (AM) also called 3D printing is the building of a three-dimensional object from a CAD model or a digital 3D model. This approach enables the design flexibility, consumes less resources (energy and toxic chemicals) compared to traditional processing methods.

Using the AM for fabrication of the parts and articles constructed on SiC and SiC-based composite would be great added value in the technological chain. The AM will significantly decrease material consumption, process time and cost.

In this invent a stereolithography process was applied to avoid high temperatures and provide maximum accuracy at printing process. The stereolithography process, so-called SLA (StereoLithography Apparatus), uses the photopolymerization phenomenon to create acrylate or epoxy resin models. The sizes and complex geometry can be precisely controlled. This technology, applied to the manufacture of ceramic objects, Therefore raw material consist of a photopolymerisable resin and a ceramic powder. This method make possible to fabricate unique and dense pieces.

This method is utilized for fabrication ceramic parts. Results are reported in the documents EP1472081B1 and EP3333140B1

The green feedstock consisted of ceramic material and resins. The ceramic components are silica, yttria zirconia (YSZ), alumina, silicon carbide, hydroxyapatite, silicon nitride and silico -aluminous. Those components have been mixed with a dispersant and then combined with photopolymerizing resin such as acrylates, urethanes acrylates, modified amine polyetheracrylate, epoxy acrylate or polyesteracrylate type.

In the patent US20090256284A1 Method for producing ceramic stereolithography parts is disclosed. However, additives able to control final properties of consolidated ceramic such as silicon carbide is not disclosed. Sintering condition, additive type, amount, post-treatment condition of SLA SiC parts is missing

Therefore, in light of the foregoing discussion, there exists a need to overcome the aforementioned drawbacks associated with the challenges in achieving and maintaining the desired electrical properties of Silicon Carbide (SiC) and SiC-based ceramics during various manufacturing and sintering processes and how to optimize these properties.

### SUMMARY

The aim of the present disclosure is to provide a composition for preparing a ceramic product by stereolithography, a ceramic product, and a method of manufacturing a ceramic product to improve the electrical properties of Silicon Carbide (SiC) and SiC-based ceramics. The aim of the disclosure is achieved by the composition, ceramic product, method of manufacturing a ceramic product and use of the ceramic product as defined in the appended independent claims to which reference is made to. Advantageous features are set out in the appended dependent claims.

The invention aims to propose a new additives for composite ceramic mixture to fine-tune fabricated components' properties, in particular a electrical properties and a method for manufacturing such components. Additional aspects, advantages, features and objects of the present disclosure would be made apparent from the drawings and the detailed description of the illustrative embodiments construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the embodiments of the disclosure are shown in the drawings, with references to the following diagrams wherein:
Figure 1. The schematic illustration of fabrication process;
Figure 2. The bimodal distribution in the organic matrix. Polymerization by UV exposure;
Figure 3. Dielectric constant and dielectric loss tangent as a function of the frequency from 100Hz to 10MHz;
Figure 4. Curve I-V sample designated as FSA;
Figure 5. Curve I-V sample designated as FSA-Y(8);
Figure 6. Curve I-V sample designated as FSA-YAG(8);
Figure 7. Curve I-V sample designated as FSA-SYG(8);
Figure 8. Curve I-V sample designated as FSA-BN(15);
Figure 9a. CTE of the samples with different ceramic loadings;
Figure 9b. CTE of the samples with 15% ceramic loading with and without additive (10% BN) after debonding and sintering;
Figure 9c. CTE of the samples in comparison with the CTE of the same mixture without boron nitride as additive and in comparison with SiC Boostec reference sample;
Figure 10. Dilatometry from -150 °C to 50 °C of the test vehicle after debonding and sintering;
Figure 11. Dilatometry from -150 to 50 C FSA, and FSA-BN10 mixture, in comparison with the CTE of the sample and the SiC Boostec.

### DETAILED DESCRIPTION OF EMBODIMENTS

The following detailed description illustrates embodiments of the present disclosure and ways in which they can be implemented. The term "first ceramic material" or "first material" refers to ceramic powder, ceramic material, primary ceramic. Throughout the present disclosure the term "ceramic product" as used herein refers to ceramic component, ceramic object, ceramic part, piece, item. The samples of the ceramic product are referred as FSA. The terms manufacturing, fabrication, preparation is used as synonyms.

Thus, according to a first aspect, the present invention relates to a composition useful for the preparation of a ceramic object by stereolithography (SLA) technology, comprises, in addition to a ceramic powder, said first ceramic material, a photopolymerizable resin, a photoinitiator and a dispersant, at least an effective amount of a sol or gel of at least one precursor of a ceramic (e.g., e.g., 15 % first type of ceramic (consist of 20% silica, 5% boron nitride, 75% silicon carbide) monomer 70% by volume; a photoinitiator 10 % by volume, a dispersant 5 % by volume.), said second material, identical or different from the first ceramic material, preferably different of the first ceramic material.

Methods of manufacturing composite ceramics, that is to say by mixing two powders, have already been considered. Methods of including dispersant to provide better homogeneity of green mixture and stress relies after SLA process is provided.

The main idea of this invention is to utilized additive manufacturing method and consolidate silicon carbide powder and fabricate compact items. The initial mixture contains additives which can tolerate the properties of the end parts, including mechanical, electrical, thermal properties.

In an embodiment, the method of manufacturing a ceramic by stereolithography comprising:
- providing a ceramic powder loaded resin where said ceramics may be or single type of ceramic either mixture containing a second material;
- The primary ceramic may have large particle size or small particles size (uniform distribution) either mixture thereof named as bimodal distribution
- The resin contain silica
- depositing a first thin layer of a mixture on a support
- Appling a first exposure of a line in a said first layer,
- Depositing the second thin layer of ceramic loaded resin and explore the new layer
- Repeating process until target object is formed.

The ceramic powder loaded resin mixture is a slurry and it comprises, a ceramic powder, an additive, a photopolymerizable resin, a photoinitiator and a dispersant.

Composition, where a slurry form of the ceramic loaded resin is used, the viscosity of said slurry is 5 to 30 Pa.s at 100 s⁻¹.

In an embodiment, where single type of ceramic loaded resin was used the said ceramic loaded resin is chosen from non-oxide ceramics family and it is silicon carbide.

In an embodiment, where mixture of ceramic was used said mixture consist of silica, silicon carbide (first material) and inorganic additives (second material). Optionally, where mixture of materials is used the said first and second materials are different in chemical origin. When different type of materials is used and the first material is silicon carbide the second materials i.e., additives are including but not limiting non-oxide ceramics such as Cubic boron nitride, hexagonal boron nitride and mixture thereof; oxide ceramics including but not limiting Yttria, Zirconia, Alumina, and mixture thereof, YAG garnet with composition of Y3Al5O12; metals, metalloids and nonmetallic elements such as carbon in form of Dimond (SYG, MICRON DIAMOND POWDER), graphite, and mixture thereof.

According to the embodiments, where first and second materials are used the ratio of said materials were 10% to 60% by volume of first ceramics and 1-20% of the second material and more preferable 3-8% by weight. The ratio of the first ceramic material and the second materials can thus be from 10, 15, 20, 25, 30, 35, 40, 45, 50 or 55 % by volume of first ceramics up to 15, 20, 25, 30, 35, 40, 45, 50, 55 or 60 % by volume of first ceramics and from 1, 3, 5, 7, 9, 11, 13, 15, 17 or 19 % of the second material by weight up to 2, 6, 8, 10, 12, 14, 16, 18 or 20 % of the second material by weight.

In other embodiments, where single type of ceramic or a mixture of ceramics are loaded in a resin, a ratio of silica containing resin to powder are varying from 80% to 95% by volume. The ratio of silica containing resin to powder can thus be from 80, 82, 84, 86, 88, 90, 92 or 94 % by volume up to 81, 83, 85, 87, 89, 91, 93 or 95% by volume.

In the embodiments, where a resin was used and the resin consist of a photopolymerizable resin a photoinitiator, a dispersant, and a silica, said photopolymerizable resin was selected from monomers and/or oligomers of the type of acrylates, urethane acrylates, amine modified polyether acrylates, epoxy acrylates or also polyester acrylates and their mixtures.

Alternatively, where resin is used the resin consist of a silica, a monomer resin, a photoinitiator and a dispersant, the amount of components in a resin was a silica (first ceramic material) 3% to 28% by volume, preferably from 5% to 7% by volume, a monomer 70% to 95% by volume, preferably from 80% to 90% by volume and more preferably from 85% to 88% by volume, a photoinitiator amount is 3% to 28% by volume, preferably from 5% to 7% by volume and a dispersant amount is 10% to 20% by volume, preferably from 7% to 15% by volume.

Thus, the composition may comprise the first ceramic material 3% to 28% by volume; the photopolymerizable resin 70% to 95% by volume; the photoinitiator 3% to 28% by volume, the dispersant 10% to 20% by volume. For example, the composition may comprise a silica 3% to 28% by volume; a monomer 70% to 95% by volume; a photoinitiator 3% to 28% by volume, a dispersant 10% to 20% by volume.

The composition may thus comprise the first ceramic material from 3, 5, 7, 9, 11, 13, 15, 17, 19, 21, 23, 25 or 27% by volume up to 4, 6, 8, 10, 12, 14, 16, 18, 20, 22, 24, 26 or 28% by volume. The composition may thus comprise the photopolymerizable resin from 70, 72, 74, 76, 78, 80, 82, 84, 86, 88, 90, 92 or 94% by volume up to 71, 73, 75, 77, 79, 81, 83, 85, 87, 89, 91, 93 or 95% by volume. The composition may thus comprise the photoinitiator from 3, 5, 7, 9, 11, 13, 15, 17, 19, 21, 23, 25 or 27% by volume up to 4, 6, 8, 10, 12, 14, 16, 18, 20, 22, 24, 26 or 28 % by volume. The composition may thus comprise the dispersant 10, 12, 14, 16 or 18 % by volume up to 12, 14, 16, 18 or 20 % by volume.

The photoinitiator is composed of Diphenyl (2,4,6-Trimethyl Benzoyl) Phosphine Oxide or Phenyl bis (2,4,6-trimethyl benzoyl) phosphine oxide. The dispersant is composed of Solsperse 17000 and DISPERBYK-111.

In the embodiments, where a bimodal ceramic loaded resin is used, said bimodal ceramic consist of large (up to 40um) and small (up to 3.7 um) particle size. The bimodal powder provided higher density 40% to 80% by volume and preferably from 45% to 65% by volume of large particle size with respect to the total volume of the composition.

The objects according to the present disclosure can be used in electronic applications and in particular for the electronics for air-space industry. Changing additive make possible to control functional properties and meet industrial requirements.

The key issue to be solved are fine-tuning initial feedstock and printing condition for fabricating controllable composition, porosity and fine-tuned grain boundary to adjust physical, mechanical and electrical properties of the ceramic part, including Silicon carbide.

This invention includes feedstock preparation and composition which can be utilized for consolidation process using stereolithography. The main outcome of this invention is i) 3D printable feedstock i.e. SiC and additives enabling fine tune properties of the consolidated components.

According to the embodiments of the present disclosure a composition, for preparing a ceramic product by stereolithography, comprises a mixture of a first ceramic material and a second materials comprising a photopolymerizable resin, a photoinitiator, and a dispersant.

Such composition enables to enhance structural integrity due to the organic matrix of the SLA printed object. This can be particularly beneficial when handling intricate ceramic parts that are prone to damage. The photopolymerizable resin allows for finer details and better resolution in the printed part compared to traditional ceramic forming methods. One of the significant advantages of 3D printing is the ability to produce complex shapes that are difficult or impossible to achieve with traditional ceramic processing methods. The inclusion of photopolymerizable resin helps in achieving these shapes more efficiently. The dispersant helps in ensuring a uniform distribution of ceramic particles within the photopolymerizable resin. This enables to achiee uniform microstructure. The presence of the polymer helps in controlling the shrinkage and reduce warping during debonding and sintering the ceramic product to achieve full ceramic density. By varying the ratio of ceramic material to photopolymerizable resin or by modifying the resin's properties, enables to achieve a range of mechanical and thermal properties in the final sintered ceramic product. Ceramic products made from such composition by SLA have significantly improved electrical properties. The inclusion of the photopolymerizable resin enables to modify the dielectric constant of the ceramic product. By adjusting the ceramic-to-resin ratio, it's possible to fine-tune the dielectric properties of the final sintered object. A uniform distribution of ceramic particles, ensured by the dispersant, enables to lead to more consistent electrical properties throughout the ceramic product. As the electrical properties of ceramic products are affected by the porosity the present composition enables after sintering to achieve reduced porosity. This enhances the insulating properties of the ceramic product.

The first ceramic material may be a slurry, liquid or in pasty form. If composition is in the slurry form the slurry has a viscosity of 5 to 30 Pa.s at 100 s-1. The viscosity of the slurry can thus be from 5, 10, 15, 20 or 25 Pa.s at 100 s⁻¹ up to 10, 15, 20, 25 or 30 Pa.s at 100 s⁻¹. The slurry having such a viscosity ensures consistent particle distribution, leading to precise layer definition and reduced deformation during the SLA process. This uniformity ensures consistent microstructure in the sintered ceramic product, resulting in homogenous electrical properties. The resultant reduced porosity enhances the dielectric strength and electrical performance of the ceramic product.

The first ceramic material may be a single type of ceramic material or a mixture of ceramic materials. Using the single type of ceramic material ensures uniform electrical properties and predictable behavior throughout the ceramicproduct. The processing steps, such as debonding and sintering, can be specifically optimized for corresponding ceramic product, leading to consistent performance and ease of manufacturing. The embodiments, wherein the ceramic materials is the mixture of ceramic materials allow for the tailoring of specific electrical properties and introduce synergistic effects that enhance performance. According to some embodiments of the present disclosure the first ceramic material may comprise SiC and Silica.

According to the embodiments, the first ceramic material may comprise a bimodal distribution of large particles up to 40 um and small particles up to 10 um uniformly distributed within an organic matrix. In different examples the large particles may be for example up to 40 micrometres (um) and small particles up to 3.7 um or the large particle may be with an average particle size 37 um and the small particles may be with an average particle size 7.6um. The large particles may thus be up to 12, 14, 16, 18, 20, 22, 24, 26, 28, 30, 32, 34, 36, 39 or 40 um and the small particles may thus be up to 1, 2, 3, 4, 5, 6, 7, 8, 9 or 10 um. The primary ceramic may have large particle size or small particles size (uniform distribution) either mixture thereof named as bimodal distribution. The bimodal powder provided higher density 40% to 80% by volume and preferably from 45% to 65% by volume of large particle size with respect to the total volume of the composition. The bimodal powder higher density my thus be from 40, 42, 44, 46, 48, 50, 52, 54, 56, 58, 60, 62, 64, 66, 68, 70, 72, 74, 76 or 78 % by volume of large particle size with respect to the total volume of the composition up to 42, 44, 46, 48, 50, 52, 54, 56, 58, 60, 62, 64, 66, 68, 70, 72, 74, 76, 78 or 80 % by volume of large particle size with respect to the total volume of the composition.

Such bimodal distribution of ceramic particles allows for efficient packing, enhancing the structural integrity of the printed ceramic product and reducing shrinkage during processing. This improved packing provides better dimensional control in the final ceramic product. The efficient particle packing from the bimodal distribution reduces porosity, leading to enhanced insulating properties and consistent dielectric behavior. Additionally, it can improve conductivity if conductive ceramic phases are present and ensures better thermal stability of electrical properties.

The first ceramic material is selected from a group comprising a silica, an yttria zirconia, an alumina, a silicon carbide, a silico-aluminous or a mixture of two or more. Silica enables low dielectric loss, which makes it suitable for high-frequency applications, and provides stability to the dielectric properties across a broad temperature range. Yttria zirconia (YSZ) has high oxygen ion conductivity, making it suitable for applications like solid oxide fuel cells (SOFCs). YSZ also provides good insulating properties. Alumina in combination with other components improves the dielectric constant and provides exceptionally low dielectric losses of the composition, making it valuable for precision electronic applications. Silicon Carbide (SiC) enables stable dielectric properties across a wide frequency range, making it suitable for RF applications. Silico-aluminous materials can have their dielectric properties tailored to specific applications and they often possess good thermal stability, ensuring consistent electrical properties over a range of temperatures. The mixture of two or more, e.g., combining SiC and Silica is especially advantageous for ceramic product produced by SLA. SiC provides high thermal conductivity, essential for efficient heat dissipation in electronic components, while Silica ensures excellent electrical insulation. The composite material also boasts enhanced mechanical strength and improved dielectric properties. Moreover, using SLA allows for tailored structures with controlled porosity and potentially adjustable coefficients of thermal expansion. Thus, the synergy of SiC and Silica enables to lead to superior performance and reliability in electronic applications.

The photopolymerizable resin is selected from a group comprising monomers and/or oligomers of a type of acrylates, epoxy acrylates, or polyester acrylates or their mixtures. Acrylates enable to faster polymerization under UV exposure. This ensures to form the uniform matrix more efficiently, which due to better particle distribution, imptoves the electrical properties post-sintering. Acrylates also offer a broad range of formulation possibilities, allowing the inclusion of additives or modifiers that improve the electrical properties of the ceramic product. Epoxy acrylates improve the adhesion between the ceramic particles and the polymer matrix. This improves structural integrity during debonding and improves the electrical properties of the ceramic product by ensuring fewer defects. Epoxy acrylates exhibit good thermal stability, ensuring the ceramic product maintains its integrity during the initial stages of sintering, which improves the final microstructure and, thus, the electrical properties. Polyester acrylates enhance the flexibility of ceramic product. This is particularly beneficial in reducing crack propagation during debonding and sintering, which influences the dielectric strength of the final ceramic product. By mixing different types of resins improves debonding and sintering processes and, consequently, the electrical properties of the ceramic product. Such mixtures balance shrinkage during polymerization and sintering, leading to improved dimensional accuracy and reduced defects in the final product, which enhances electrical performance.

The photoinitiator is composed of Diphenyl (2,4,6-Trimethyl Benzoyl) Phosphine Oxide or Phenyl bis (2,4,6-trimethyl benzoyl) phosphine oxide. Both photoinitiators enable efficient and broad-spectrum UV absorption for consistent polymerization, leading to reduced yellowing and fewer residuals in printed objects. Their efficient radical generation ensures a uniform polymer matrix, promoting better ceramic particle distribution and fewer micro-defects. This enhances the electrical properties of the sintered ceramic product by minimizing defects and ensuring consistent microstructures.

The composition according the embodiments of the present disclosure may further comprise one or more additives selected from non-oxide ceramics comprising cubic boron nitride, hexagonal boron nitride or mixture thereof, or from oxide ceramics comprising Yttria, Zirconia, Alumina, or mixture thereof, YAG garnet with composition of Y3Al5O12, or from a group comprising metals, metalloids or nonmetallic elements comprising a carbon in a form of Dimond, graphite, or mixture thereof.

The non-oxide ceramics (e.g.,c ubic boron nitride, hexagonal boron nitride, or mixture helps to increase thermal stability to the ceramic mixture, beneficial for applications with elevated temperature requirements. Hexagonal boron nitride (h-BN) is an excellent electrical insulator, enhancing the insulating properties of the ceramic object.

The oxide ceramics (Yttria, Zirconia, Alumina, mixture, YAG garnet) enable to achieve improved sinterability as acting act as sintering aids, promoting densification at lower temperatures or shorter times. The inclusion of YAG garnet enhances the mechanical strength of the ceramic object. The oxide ceramics enables to modify the dielectric constant of the ceramic product. E.g., alumina enable to enhance the insulating properties, while dopants in zirconia enable to modify its dielectric behavior.

The metals, metalloids, or nonmetallic Elements (carbon in the form of diamond, graphite, or mixture) enable to improve thermal conductivity. Diamond, as an excellent thermal conductor helps significantly to enhance the thermal conductivity of the ceramic product, which is beneficial for heat dissipation in electronic applications. The inclusion of graphite helps to introduce electrical conductivity to an otherwise insulating ceramic matrix.

The incorporation of these additives has surprising technical effect to improve electrical properties of the ceramic product prepared using stereolithography.

The composition according the embodiments of the present disclosure may further comprise a plasticizer. According to the present invention, the addition of plasticizer in the pasty composition is advantageously combined with the use of a quantity of stabilized zirconia powder in an amount of between 49 and 55% of the total volume of the composition in order to maintain the viscosity of the composition at a value of at least 10 000 pascal-seconds at a flow rate gradient of 0.1 sec -1 so that the dough is "self-supporting", that is to say does not flow itself and that the unpolymerized parts of one layer can support the next layer.

According to the invention, the plasticizer eliminates or minimizes the internal stresses during the photopolymerization and makes it possible to quickly relax the possible residual stresses that may appear after exposure to radiation, due to the kinetics of polymerization, this thanks to a decrease in the interactions between chains that promotes their mobility.

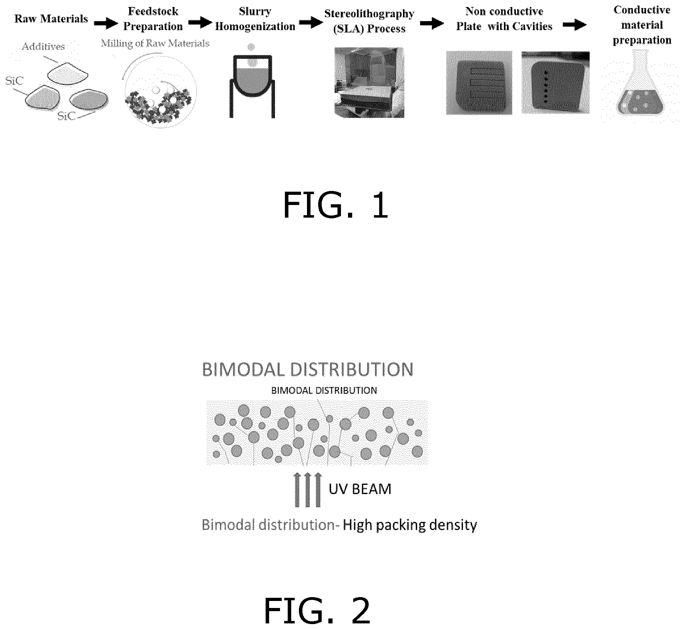

Process description of SLA process. The fabrication process of a ceramic parts by SLA consists of 1) depositing on a support a first thin layer of a mixture (liquid or pasty form) of a ceramic powder, a additives, a photopolymerizable resin, a photoinitiator, a dispersant, 2) polymerize this layer by preset patterns using UV exposure. 3) Deposition the second layer the same way as the first layer and repeat polymerization process. Those steps are repeated until preset object is formed. In the last stage the unpolymerized parts is removed. 3D object undergoes to post treatment including thermal decomposition and finally step is sintering. The process is sketched in the figure 1.

In an embodiment of the present disclosure a method of manufacturing a ceramic product by stereolithography comprises forming a first layer by depositing a composition according to the embodiments of the present disclosure on a support and polymerizing the first deposited layer of the composition by using an UV exposure; forming a second layer by depositing the composition to the polymerized first layer and polymerizing the second deposited layer of the composition by using the UV exposure; forming one or more subsequent layers by repeating forming and polymerizing the first layer and forming and polymerizing the second layer according to a preset pattern of the ceramic product; removing the formed layers from the support; debonding the formed layers; sintering the debonded layers; cooling the sintered layers.

The method for manufacturing the ceramic product according to the embodiments of the present disclosure using the compositions according to the present disclosure by stereolithography helps to improve the electrical properties of the ceramic product. The stereolithography process, combined with the ceramic-resin composition of the present disclosure, allows to manufacture the ceramic products of intricate and complex geometries that are difficult to achieve with traditional ceramic forming methods. Using the photopolymerizable resins ensures high resolution and precision in the printed ceramic products, resulting in fewer defects and improved dimensional stability. By incorporating the first ceramic material and the second material, the method enables to improve the electrical properties of the final sintered ceramic, enhancing aspects like dielectric strength, conductivity, or thermal stability. Overall, the present method provides an efficient approach to ceramic manufacturing, leading to products with improved and customizable electrical properties.

To achieve the goals following parameters have been optimized: particle shape, particle size, additives, process parameter optimization, debonding, post treatment and sintering.
*1) Particle shape.* The choice of appropriate processing conditions and the achievement of the required properties for the final components greatly depend on the shape of the solid phase. Powder sinterability, packing density, compressibility, mechanical behavior, reactivity and flowability, among the others, are influenced by particle shape. In general, particle shape is classified i) one dimensional including articular, and rod-like, ii) Two dimensional, including dendritic, and flaky; iii) Three dimensional, including porous, angular/irregular, spherical, Rounded. Selection of right particle shape is important for printing process.
2) Particle size. Apart from the composition, the particle size and distribution play a key role in the additive manufacturing process: hence in this study, we explored the effect of the particle size, too. We selected two types of silicone carbide a) relatively large particle size with an average 37 um particle size (SA37) b) small particle size with an average particle size of 7.6um. The mixture of those large and small sized components called bimodal distribution was uniformly distributed within organic matrix as illustrated in the figure 2 then said organic monomer/oligomer has been polymerized by means of UV exposure.
3) Additives. For ceramic powder consolidation (sintering, hot-press, etc.) a second ceramic powder i.e., additives have been added. Said additives are different from primary ceramic, i.e., different from the first ceramic material, by chemical nature.
   The additives including family of non-oxide ceramics such as Cubic boron nitride, hexagonal boron nitride and mixture thereof. Oxide chemical including but not limiting Yttria, Zirconia, Alumina, and mixture thereof. Metals, metalloids and nonmetallic elements such as carbon in form of Dimond, graphite, and mixture thereof.
4) Process parameter optimization. Depending on printing direction-vertical and horizontal the outcome is different.
5) Debonding. The debonding comprises treating the formed layers at 240°C up to 8h, rising the temperature to 300 °C and keeping at 300 °C up to 8h. After SLA and fabrication 3D object the part was removed from plate and subjected to debonding process. This is for removing the organic compound and preparing inorganic ceramic for sintering. Depending on debonding condition the properties of final component is changed. Debonding processes is stepwise: 1) treatment 240°C up to 8h, 2) temperature rises to 300°C, kept up to 8h. Heating rate from 0.1 to 5 C/min, cooling rate 0.1 to 10 C/min.
   The treatment duration at 240 °C can thus be up to 1, 2, 3, 4, 5, 6, 7, or 8 hours. The treatment duration at 300 °C can thus be up to 1, 2, 3, 4, 5, 6, 7, or 8 hours. The heating rate can thus be from 0.1, 0.6, 1.1, 1.6, 2.1, 2.6, 3.1, 3.6, 4.1, or 4.6 C/min up to 0.6, 1.1, 1.6, 2.1, 2.6, 3.1, 3.6, 4.1, 4.6, or 5.0 C/min. The cooling rate can thus be from 1, 2, 3, 4, 5, 6, 7, 8, or 9 C/min up to 2, 3, 4, 5, 6, 7, 8, 9, or 10 C/min.
6) Post treatment and sintering. The sintering comprises heating the debonded layers up to a first sintering temperature 900 °C with heating rate of 0.1 to 10 °C/min, and keeping the heated layers at the first sintering temperature from 1 to 8h; rising the temperature up to a second sintering temperature 1200 - 1300 °C by heating rate of 0.1 to 10C/min and keeping at the second sintering temperature for 10min to 8h. Post treatment and sintering was done in air, nitrogen, Argon and vacuum environment. The samples heated up to 900 ° C with heating rate of 0.1 to 10 °C/min, kept at target temperature from 1 to 8h. Step 2. 1200-1300 °C, heated up by rate of 0.1 to 10 °C/min, kept at target temperature for 10min to 8h.

The first sintering temperature can be up to 500, 550, 600, 650, 700, 750, 800, 850 or 900 °C. The first sintering heating rate can thus be from 0.1, 1.0, 1.9, 2.8, 3.7, 4.6, 5.5, 6.4, 7.3, 8.2, 9.1, or 10.0 °C/min. The duration at first sintering temperature can thus be up to 1, 2, 3, 4, 5, 6, 7, or 8 hours. The second sintering temperature can be 1200, 1210, 1220, 1230, 1240, 1250, 1260, 1270, 1280, 1290, or 1300 °C. The second sintering heating rate can thus be from 0.1, 1.0, 1.9, 2.8, 3.7, 4.6, 5.5, 6.4, 7.3, 8.2, 9.1, or 10.0 °C/min. The duration at the second sintering temperatud can be 10 minutes (0.167 hours), 1, 2, 3, 4, 5, 6, 7, or 8 hours.

Cooling. The cooling comprises cooling the sintered layers down from the second sintering temperature to a first cooling temperature 900 °C by rate of 0.1-10 °C/min, keeping at the first cooling temperature for a first cooling time 10min to 8h; after the cooling time is reached cooling the sintered layers down to a second cooling temperature 25 °C by rate of 0.1 to 10 °C/min, for a second cooling time 10min to 8h. The samples cooled down from 1300 °C to 900 by rate of 0.1 to 10 °C/min, kept at target temperature for 10min to 8h. Step 2 cooling. After preset time is reached the samples were cooled down to 25 °C by rate of 0.1 to 10 °C/min, dwell 10min to 8h.

The cooling rate from the second sintering temperature to the first cooling temperature can thus be from 0.1, 1.0, 1.9, 2.8, 3.7, 4.6, 5.5, 6.4, 7.3, 8.2, 9.1, or 10.0 °C/min. The duration at first cooling temperature (900°C) can be 10 minutes (0.167 hours), 1, 2, 3, 4, 5, 6, 7, or 8 hours. The cooling rate cooling from the first cooling temperature to the second cooling temperature can thus be from 0.1, 1.0, 1.9, 2.8, 3.7, 4.6, 5.5, 6.4, 7.3, 8.2, 9.1, or 10.0 °C/min. The duration at second cooling temperature (25°C) can be 10 minutes (0.167 hours), 1, 2, 3, 4, 5, 6, 7, or 8 hours.

In another aspect the present disclosure provides a ceramic product, wherein the ceramic product comprises a first layer formed from a composition according to the embodiments of the present disclosure, polymerized by UV exposure; a second layer formed from the composition and deposited onto the polymerized first layer, polymerized by UV exposure; and one or more subsequent layers, each formed and polymerized in a manner consistent with the first and second layers, arranged according to a preset pattern of the ceramic product. Such multi-layer structure of the ceramic product allows for the creation of intricate and complex geometries which are impossible to achieve through traditional ceramic fabrication methods. Each layer polymerized before the next layer is added ensures the ceramic product has more uniform microstructure throughout the ceramic product, which improves both mechanical and electrical properties, reduces defects, improves structural integrity.

The properties of the ceramic product of the present disclosure according to the following samples FSA-15, FSA-15-Y8, FSA-15-SYG(8) and FSA-15-YAG(8) are for example as follows. Electrical resistivity of the ceramic product may be 1.68E+10 ohm·cm - 7.16E+10 ohm·cm. Breakdown voltage of the ceramic product may be 12-18 kV. Dielectric Strenght of the ceramic product may be 19500-32900 V/cm.

The ceramic product according to the present disclosure can be used in the applications selected from the group comprising industrial control, power and renewable energy, reactors, cooling solutions in system design; electric vehicles; hybrid electric vehicles; electric traction control; power supply units; photovoltaic applications; converters; inverters; heat exchangers; power electronics; renewable energy systems; electronic applications for air-space industry; thermal management systems; shielding protective armor for spacecrafts; heat sinks or 3D printing of fine ceramics.

### EXAMPLES FOR CARRYING OUT THE INVENTION

This document summarizes the results obtained for the samples done by SLA of ceramic samples based on SiC and silica. Mixture designated as FSA with different solid loading, 10, 12.5, 15, 17.5 and 20 % of SiC. Fixing the solid loading of 15%, different additives were studied, Y2O3, YAG, SYG and BN.

The following examples are based on the ceramic product according to the present disclosure, wherein: a firs sample comprising Silicon Carbide (SiC) and Silica based first ceramic material with solid loading of 15% and additive Yttrium (Y) 8% by weight (FSA-15- Y(8)); a second sample comprising Silicon Carbide (SiC) and Silica based first ceramic material with solid loading of 15% and additive Diamond (SYG) % by weight (FSA-15- SYG(8)); a third sample comprising Silicon Carbide (SiC) and Silica based first ceramic material with solid loading of 15% and additive Yttrium Aluminum Garnet with composition of Y3Al5O12(YAG) 8% by weight (FSA-15- YAG(8)); and a fourth sample comprising Silicon Carbide (SiC) and Silica based first ceramic material with solid loading of 15% and additive cubic boron nitride (NB) 15% by weight (FSA-BN-15).

**Exemplary 1.** Electrical performance. For dielectric characterization, electrodes were painted with silver paint. Dielectric measurements were carried out at Room Temperature (RT) and in the frequency range of 100 Hz to 10 MHz using an impedance analyzer (LCR meter HP4284A).

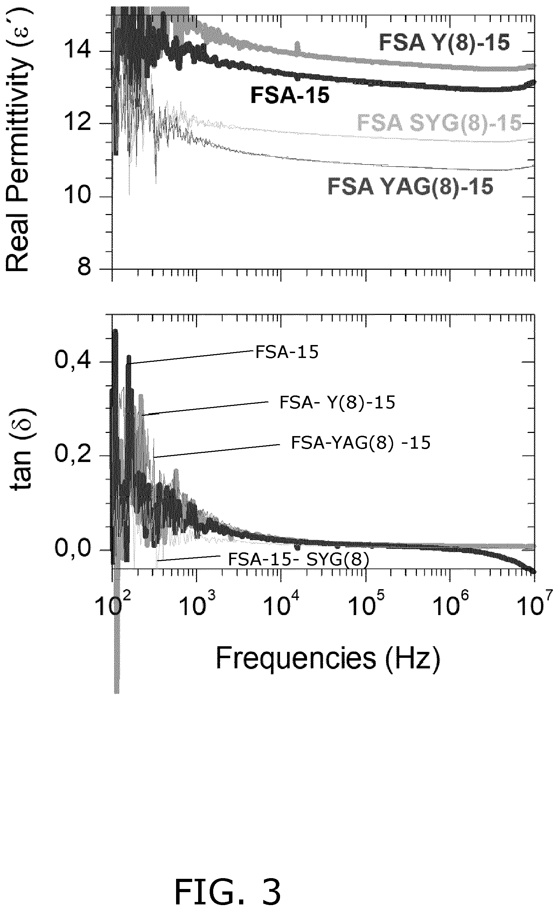

1.1 Results. Figure 3 Showes results for different composition to be able alter electrical properties. The sample tested is designated as FSA-15, FSA-15-Y8, FSA-15-SYG(8) and FSA-15-YAG(8).

**Table 1.1. Dielectric constant and dielectric loss tangent of the samples with 15% first type ceramic loading without additives (FSA-15) and with additives using 8% Yttria (FSA-15-Y(8)), 8% Diamond (FSA-15- SYG(8)) and 8% Yttrium aluminium garnet (FSA-15- YAG(8)).**

| Sample | Dielectric constant | Dielectric loss tangent |
|---|---|---|
| FSA-15 | 12.97 @1MHz | 4.58 E-4 @1MHz |
| FSA-15- Y(8) | 13.53 @1MHz | 7.54 E-4 @1MHz |
| FSA-15- SYG(8) | 11.53 @1MHz | 5.54 E-4 @1MHz |
| FSA-15- YAG(8) | 10.75 @1MHz | 6.33 E-4 @1MHz |

It can be seen, that the dielectric loss tangent of the samples slightly increases adding the mentioned additives.

The table above shows that the dielectric properties of ceramic products according to the present disclosure measured at 1 megahertz (MHz) have high dielectric constants and low loss tangents which are needed in applications like capacitors, sensors, capacitive applications and other electronic components. The ceramic product comprising SiC and silica with these additives have clearly improved dielectric properties of the base ceramic (SiC and silica). The sample labeled "FSA-15- Y(8)" exhibits the highest dielectric constant of 13.53 at 1MHz. This could indicate that this particular sample has a higher ability to store electrical energy in an electric field when compared to the others.The sample "FSA-15- Y(8)" also has the highest dielectric loss tangent, which means it has slightly higher energy loss compared to the others, despite its high dielectric constant.

### Exemplary 2. Electrical resistivity

1.2 Experimental method. Device: Autolab PGSTAT302N.

**Table 1.2: The electrical resistivity of the samples with 15% first type ceramic loading without additives (FSA-15) and with additives using 8% Yttria (FSA-15-Y(8)), 8% diamond (FSA-15- SYG(8)), 8% Yttrium aluminium garnet (FSA-15- YAG(8)) and 15% BN (FSA-BN-15).**

| Sample | ohm·cm |
|---|---|
| FSA-15 | 2,74E+10 |
| FSA-15-Y(8) | 2,57E+10 |
| FSA-15-YAG8) | 2,50E+10 |
| FSA-15-SYG(8) | 1,68E+10 |
| FSA-BN-15 | 7.16E+10 |

The resistivity of the samples is not change, changing the additives. Only the resistivity of samples containing BN as an additive increases slightly.

The table of example 2 shows that electrical resistivity of various samples according to the embodiments of the present disclosure, which is a critical parameter in many electronic and electrical applications. Materials with higher resistivity values are more insulating, while those with lower resistivity values are more conductive. The ceramic product with high resistivity values are very good for insulators in electrical and electronic applications, e.g., for components that need to prevent electrical conduction, such as in the casings of electronic devices, insulating layers on circuit boards, or as dielectrics in capacitors.

The sample "FSA-BN-15" has the highest resistivity value, making it the most insulating among the samples. Such a material is suitable for applications where electrical insulation is most important. The sample "FSA-15-SYG(8)" has the lowest resistivity value, which makes this sample is the most conductive among the present samples.

Exemplary 3. Break down voltage. Evaluation of Break Down Voltage and Dielectric Strenght. Device: For DC test, Dielectric Breakdown Volatge and dielectric strenght are evaluated by using a HV DC Power Supply 60 kV and 2.5 mA (Hipotronic, Brewster, NY). Both sides of the disks are silver painted. Samples are dried at 120 °C 2h and then cooled down to Room Temperature in a desiccator. The discs are immersed into a dielectric medium (silicone oil).

**Table 1.3. Breakdown Voltage and dielectric strength of the samples with 15% first type ceramic loading with and without additives.**

| **Sample** | **Breakdown Voltage (kV)** | **Dielectric Strength (V/cm)** |
|---|---|---|
| FSA | 12,36 | 19619,0 |
| FSA Y(8) | 16,51 | 27983,1 |
| FSA YAG | 14,03 | 24614,0 |
| FSA SYG | 17,7 | 32777,8 |

The breakdown voltage and dielectric strength of the samples increases adding additives. Exceptional results shows the samples containing diamond as an additive.

The above table of example 3 shows the ability of different samples of the ceramic product to resist electrical breakdown. The sample "FSA SYG" has highest breakdown voltage at 17.7 kV and also the highest dielectric strength at 32,777.8 V/cm. This indicates that this ceramic product withstands higher electric fields before experiencing electrical breakdown compared to the other samples. This ceramic product is also particularly robust against electrical breakdown, making it suitable for applications that require high resistance to electric fields or where high voltages might be encountered. The sample "FSA" has the lowest breakdown voltage of 12.36 kV and a dielectric strength of 19,619.0 V/cm, making it the least resistant to electrical breakdown among the listed samples.

### Exemplary 4. Mechanical properties. 1.3 Experimental method. 3 point bending test- Instron-5000 and Grindosonic

**Table 1.4. Elastic modulus of the samples with different first type of ceramic loading using various techniques.**

| SAMPLE | | Grindosonic-Impulse Excitation tecnhique | | 3Point-Flexure Test- Optimizing Edges samples | | | |
|---|---|---|---|---|---|---|---|
| Mixture Designation | % Solid Loading | E, Gpa (Average) | St DEV | E, GPa (Average) | St DEV | s_{f}(MPa) | St DEV |
| FSA | 15,0 | 17,0 | 1,6 | 13,0 | 0.8 | 31,0 | 4,3 |
| FSA | 17,5 | 23,0 | 0,4 | 18,0 | 0.1 | 37,0 | 4,4 |

The elastic modulus increases increasing the first ceramic loading amount. This is caused by less microcracks generated during the debinding when ceramic loading is higher.

The first table above of example 4 shows mechanical properties of the ceramic product according to the present disclosure without additives with solid loading 15.0% and 17.5%. The sample of the ceramic product with 17.5% solid loading shows superior mechanical properties in terms of the modulus of elasticity and flexural strength. Thus, an increase in solid loading from 15.0% to 17.5% improves mechanical characteristics, as seen in both the Grindosonic-Impulse Excitation technique and the 3Point-Flexure Test. The sample with 17.5% solid loading emerges as the more mechanically robust. Materials with higher moduli of elasticity and flexural strength are more rigid and withstand greater forces without deformation. This makes corresponding ceramic product suitable for structural applications or scenarios where mechanical durability is essential. The table shows that by adjusting solid loadings the microstructure or density of the ceramic product can be altered. The higher percentage enables to lead to a denser or more interconnected microstructure, improving mechanical resilience.

**Table 1.5. Elastic modulus of the samples containing various additives.**

| SAMPLE | | Grindosonic-Impulse Excitation tecnhique | | 3Point- Flexure Test- Optimizing Edges samples | | | |
|---|---|---|---|---|---|---|---|
| Mixture Designation | % Solid Loading | E, Gpa (Average) | St DEV | E, GPa (Average) | St DEV | s_{f}(MPa) | St DEV |
| FSA-YAG (8%) | 15 | 24,0 | 3,7 | 18,0 | 2,2 | 28,0 | 4,9 |
| FSA-Y(3%) | 15 | 23,0 | 2,1 | 18,0 | 1,5 | 38,0 | 5,5 |

The table shows that the elastic modulus improves sharply adding sintering additives.

The second table of example 4 shows mechanical properties of the ceramic product according to the present disclosure with solid loading 15.0% comprising additives YAG and Y. Both samples of the ceramic product showed similar elasticity, but "FSA-Y(3%)" exhibited superior flexural strength, which shows that the additive enables to enhance the material's resistance to bending or breaking under stress. Materials with higher moduli of elasticity and flexural strength are preferred in applications requiring mechanical robustness, such as structural components or protective layers. The additive type and its concentration thus play a crucial role in determining the material's modulus of elasticity and flexural strength. Among the listed samples, "FSA-Y(3%)" stands out in terms of flexural strength, making it potentially more resilient to bending stresses.

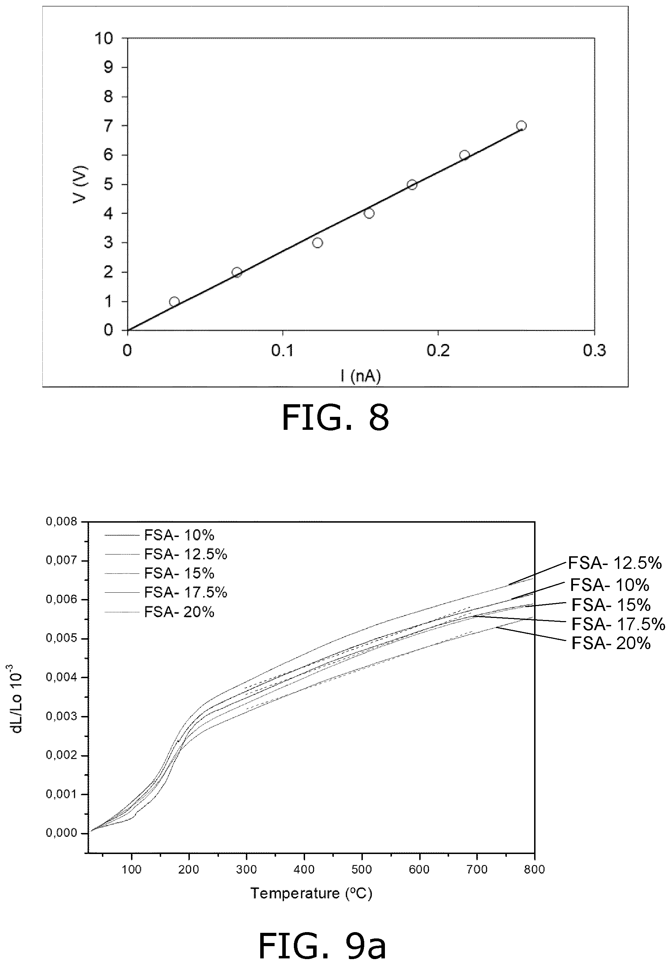

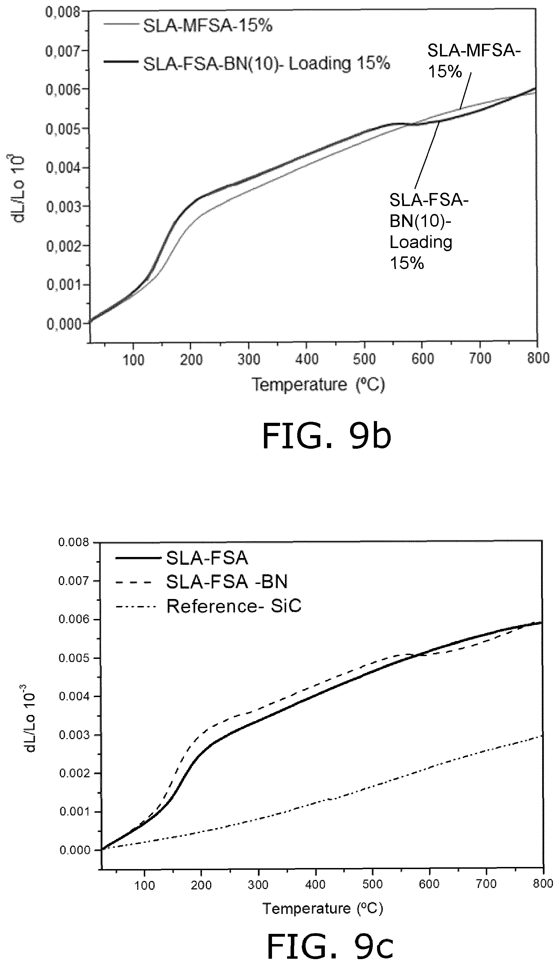

Exemplary 5. Evaluation of CTE. Device: NETZSCH DIL 402 PC. For the FSA mixture with different solid loadings from 10 to 20% from RT up to 800 C. The coefficient of thermal expansion, CTE, was done in two different ranges from RT up to 800 C and from -150 to 50 C. Figures FIG.9a and FIG. 9b exhibit the dilatometry of the sample from RT to 800 C. The following table summarizes the CTE obtained in different temperature ranges.

| Temperature Range C | | CTE /C |
|---|---|---|
| | RT- 100 C | 9.51 E-06 |
| 100- 175 C | | 2.9 E -05 |
| 229- 514C | | 5.183 E -06 |

The first table of example 5 shows the Coefficient of Thermal Expansion (CTE) values for different temperature ranges, i.e., how much the material expands or contracts for each degree Celsius change in temperature. A higher CTE means that the material will undergo more significant dimensional changes with temperature fluctuations. The highest CTE value show the material expands or contracts the most in this temperature range compared to the others, the lowest CTE value indicates minimal dimensional changes in this temperature range.

The table shows thermal responsiveness of the ceramic product across different temperature intervals.

| Temperature Range C | CTE /C |
|---|---|
| -140 to -81C | 3.88 E-6 |
| -53 to 3 C | 6.38 E-7 |
| 13 to 45 C | 5.59 E-6 |

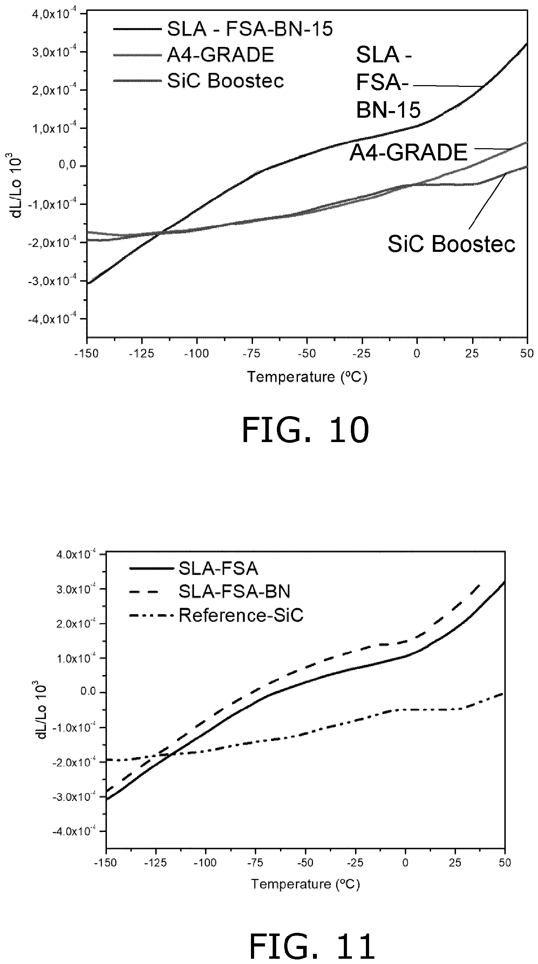

The CTE was evaluated from -150 to 50 C, the dilatometry curve is presented in Figure 10 for the test- vehicle in comparison with the A4Grade sample and a SiC reference from Boostec.

The second table of example 5 above shows the Coefficient of Thermal Expansion (CTE) values for temperature ranges: "-140 to -81°C", "-53 to 3 °°C", and "13 to 45 °C". The CTE values here indicate how much the material expands or contracts for each degree Celsius change in temperature within the specified ranges. The highest CTE is observed in the "-140 to -81°°C" range, suggesting that the material undergoes the most significant dimensional changes in this extremely cold temperature interval. In contrast, the "-53 to 3 °C" range showcases the lowest CTE, indicating minimal dimensional changes in this temperature range. Unlike the previous table, which covered relatively higher temperature ranges, present table focuses on the material's behavior in colder temperature intervals. This provides insights into the material's thermal responsiveness under cold conditions. In the extremely cold range of "-140 to -81 °°C", the material exhibits a pronounced CTE, which suggests that the material undergoes significant expansion or contraction in this temperature range. As temperatures approach the freezing point (in the "-53 to 3 °C" range), the material's CTE decreases, which indicates greater thermal stability, with the material experiencing minimal dimensional changes near and just below the freezing point. In Mild Cold "13 to 45 °°C" range, which is a milder cold to ambient temperature interval, the material has a CTE, suggesting consistent expansion or contraction behavior in this range. Given its unique thermal expansion profile in cold regimes, this material is particularly suitable for applications in cold environments, such as aerospace or polar regions. Devices or structures made from this material that operate in these temperature ranges would need to account for its thermal expansion or contraction.

The following table summarizes the results obtained for the CTE at RT and at 77K by extrapolation of the curve.

| **Properties** | **Value** |
|---|---|
| CTE @ RT | 2.77 E-6 /°C |
| 0.5CTE @ 77K Extrapolation | 4.25 E-6/°C |

The third table of example 5 above shows properties related to the material's Coefficient of Thermal Expansion (CTE), i.e., it provides the Coefficient of Thermal Expansion at Room Temperature (RT) (CTE @ RT) and an extrapolated CTE value at a very low temperature of 77K (Kelvin) (0.5CTE @ 77K Extrapolation), thus showing the material's thermal expansion behavior at room temperature and at a significantly colder temperature (77K is approximately -196 °°C).

The material's CTE at room temperature indicates how much the material would expand or contract with every degree Celsius change at ambient conditions.

The extrapolated CTE value at 77K is higher than the CTE at room temperature, which means that the material is more responsive (i.e., it expands or contracts more) to temperature changes in extremely cold conditions. Thus such materials are crucial for applications like superconducting magnets, cryogenic fluid storage, or space exploration, where materials are exposed to very low temperatures. The material's higher responsiveness to temperature changes at 77K compared to room temperature shows its unique thermal characteristics, making it suitable for specific cold-environment applications.

Exemplary 6. Thermal conductivity OF SAMPLES DONE BY SLA BASED ON SIC. Evaluation of the thermal conductivity, thermal diffusivity and specific heat of the FSA-15- Y(8) at RT. Device: HOTDISK- TPS method.

| Th.Conductivity | Th.Diffusivity | Spec.Heat |
|---|---|---|
| 0.9882 W/mK | 0.6077 mm²/s | 1.626 MJ/m³K |
| 0.9877 W/mK | 0.6026 mm²/s | 1.639 MJ/m³K |

Evaluation of the thermal diffusivity and specific heat of the FSA-15 from RT to 800 C of FSA with 15 and 17.5 solid loading. Device: Laser Flash Method.

The first table of example 6 shows material's thermal conductivity (Th. Conductivity), represented in watts per meter-kelvin (W/mK), the material's thermal diffusivity (Th. Diffusivity), shown in millimeters squared per second (mm²/s) and the material's specific heat capacity (Spec. Heat), represented in megajoules per cubic meter-kelvin (MJ/m³K). Thermal conductivity indicates how well the material conducts heat. These values show that the material has a moderate ability to conduct heat. Thermal diffusivity measures how quickly heat spreads through a material, and these values show a moderate rate of heat spread. Specific heat capacity indicates the amount of heat required to raise the temperature of a unit volume of the material by one degree Kelvin. The values show the material's capacity to store heat.

Both examples have similar and moderate thermal conductivity values, showing that the material can conduct heat reasonably well, which is crucial in applications where efficient heat transfer or dissipation is required. The material's thermal diffusivity values are consistent across the two examples, which shows the moderate thermal diffusivity, which means that heat spreads through the material at a steady rate, which can be essential for applications where uniform heat distribution is desired. The specific heat capacity values are close and indicate the material's ability to store a moderate amount of heat. A higher specific heat capacity means that more energy is required to change the material's temperature, making it useful in applications where temperature stability is vital.

Given its moderate thermal conductivity, the material is suitable for use in devices that require efficient heat transfer, such as heat sinks in electronics or heat exchangers in HVAC systems. The material's ability to store heat and its consistent heat diffusion properties makes it a good candidate for thermal insulation applications. With its specific heat capacity, the material might be explored for use in thermal batteries or other systems that rely on heat storage.

### FSA-15% solid loading

| Temperature | Th.Diffusivity |
|---|---|
| 27°C | 0.614 mm²/s |
| 100°C | 0.550 mm²/s |
| 200°C | 0.525 mm²/s |
| 300°C | 0.529 mm²/s |
| 400°C | 0.517 mm²/s |
| 600°C | 0.516 mm²/s |
| 800°C | 0.520 mm²/s |

The second table of example 6 shows the material's thermal diffusivity (Th.Diffusivity) of the ceramic product with 15% solid loading at each corresponding temperature in range of 27 °C - 400 °C in millimeters squared per second (mm²/s). As the temperature increases from 27°°C to 400°°C, the thermal diffusivity generally decreases, showing that the rate at which heat spreads through the material reduces with increasing temperature. However, there's a minor increase when transitioning from 200°°C to 300°°C. The highest thermal diffusivity is at 27°°C, while the lowest is at 400°°C. At 27°°C, which is approximately room temperature, the material exhibits its highest thermal diffusivity, which means that the material is most efficient at distributing heat at ambient conditions. The material's high thermal diffusivity at room temperature makes it suitable for thermal management in electronics, where efficient heat dissipation at ambient conditions is crucial. The material's thermal diffusivity indicates how quickly heat spreads through it, varies with temperature. As the temperature rises, the thermal diffusivity decreases, showing that the material becomes less efficient at spreading heat as it gets hotter. As the thermal diffusivity decreases with temperature, the material might act as a better insulator at higher temperatures, retaining heat rather than spreading it. While the material is efficient at heat diffusion at room temperature, its capability diminishes as it gets hotter, with a slight exception between 200°°C and 300°°C.

### FSA-17.5% solid loading

| Temperature | Th.Diffusivity |
|---|---|
| 27°C | 0.621 mm²/s |

The third table of example 6 shows the material's thermal diffusivity (Th.Diffusivity) of the ceramic product with 17.5% solid loading at a temperature 27°C (by Celsius). The material's thermal diffusivity value at 27 °C indicates its ability to efficiently spread heat at room temperature. A higher thermal diffusivity means that the material can quickly distribute thermal energy, preventing localized hotspots and ensuring a uniform temperature distribution. This value compared to the value in the previous table for the same temperature is higher. The material's higher thermal diffusivity at room temperature makes it suitable for applications that require rapid heat dispersion. This includes electronic devices where efficient heat management can enhance performance and longevity. In scenarios where preventing overheating is crucial, materials with high thermal diffusivity can be advantageous, as they can quickly spread and dissipate heat, reducing the risk of thermal-related malfunctions or hazards. The close thermal diffusivity values observed in materials with different slod loadings for the same temperature show that the material is quite consistent in its thermal properties, at least at room temperature.

### DETAILED DESCRIPTION OF THE DRAWINGS

Referring to FIG. 1, there is shown a schematic illustration of fabrication process. The fabrication process comprises preparing feedstock by milling of raw materials, the first ceramic material SiC and additives as the second materials, homogenizing the slurry, performing stereolithography (SLA) process, obtaining the non conductive plate with cavities, preparing conductive material.

Referring to Fig. 2, there is shown the bimodal distribution in the organic matrix and polymerization by UV exposure. The mixture of those large and small sized components called bimodal distribution was uniformly distributed within organic matrix as illustrated in the figure FIG. 2 then said organic monomer/oligomer has been polymerized by means of UV exposure.

Referring to FIG. 3, there is shown Dielectric constant and dielectric loss tangent as a function of the frequency from 100Hz to 10MHz. Figure 3 Showes results for different composition to be able modulate the dielectric properties. The samples tested are designated as FSA- 15, FSA-15- Y8, FSA-15- SYG(8) and FSA-15- YAG (8). Lower values of the dielectric constant can be obtained that are preferred for high frequency applications or to minimize electric power losses. Similarly, by changing the additives, the dielectric losses can be tuned given more effectivity as a dielectric material.

| Sample | Dielectric constant | Dielectric loss tangent |
|---|---|---|
| FSA-15 | 12.97 @1MHz | 4.58 E-4 @1MHz |
| FSA-15- Y(8) | 13.53 @1MHz | 7.54 E-4 @1MHz |
| FSA-15- SYG(8) | 11.53 @1MHz | 5.54 E-4 @1MHz |
| FSA-15- YAG(8) | 10.75 @1MHz | 6.33 E-4 @1MHz |

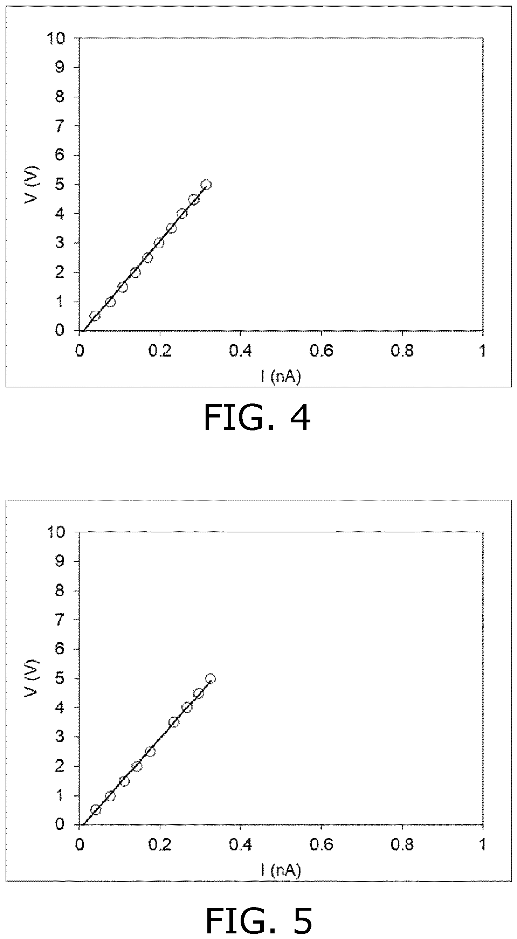

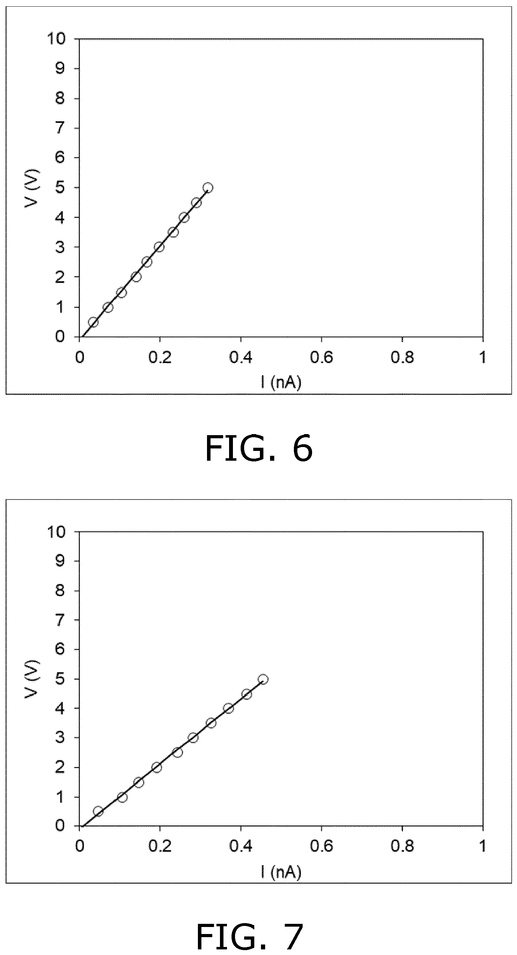

Figures FIG. 4-FIG. 8 illustrate current-voltage (I-V) curves showing the relationship between the current passing through the ceramic products and the voltage across it. Referring to figure FIG. 4 there is shown curve I-V sample designated as FSA; referring to figure FIG. 5 there is shown curve I-V sample designated as FSA-Y(8); referring to figure FIG. 6 there is shown curve I-V sample designated as FSA-YAG(8); referring to figure FIG. 7 there is shown curve I-V sample designated as FSA-SYG(8); referring to figure FIG. 8 there is shown Curve I-V sample designated as FSA-BN(15).

Referring to figure FIG 9a. CTE of the samples done by SLA with different ceramic loadings (SLA-MFSA-15% and SLA-FSA-BN(10)- Loading 15%).

Referring to figure FIG 9b CTE of the samples done by a CTE of the test vehicle after debonding and sintering based on FSA-BN10 mixture, loading 15% (blue curve) in comparison with the CTE of the same mixture without boron nitride as additive - FSA-15 (green curve).

Referring to figure FIG 9c CTE of the samples done by a CTE of the test vehicle after debonding and sintering based on FSA-BN10 mixture, loading 15% (dashed-curve) in comparison with the CTE of the same mixture without boron nitride as additive - FSA-15 (solid curve). In comparison with SiC Boostec reference sample (dash-dot-dot curve).

Referring to figure FIG. 10. Dilatometry from -150 to 50 C of the test vehicle after debonding and sintering based on FSA-BN10 mixture, loading 15% (blue curve) in comparison with the CTE of the A4-Grade sample and the SiC Boostec reference sample.

Referring to figure FIG. 10. Dilatometry from -150 to 50 C of the test vehicle after debonding and sintering based on FSA, and FSA-BN10 mixture, loading 15% (dashed curve) in comparison with the CTE of the sample and the SiC Boostec reference sample (dash-dot-dot curve). The values obtained for FSA and FSA-BN and SiC reference sample the values obtained below 9 E-6, and the material can be considered as ceramic material with low CTE.

## Claims

1. A composition for preparing a ceramic product by stereolithography, the composition comprises a mixture of a first ceramic material and a second materials comprising a photopolymerizable resin, a photoinitiator, and a dispersant.

2. The composition according to claim 1, wherein the first ceramic material is a single type of ceramic material or a mixture of ceramic materials.

3. The composition according to claim 1 or 2, wherein the first ceramic material comprises a bimodal distribution of large particles up to 40 um and small particles up to 10 um uniformly distributed within an organic matrix.

4. The composition according to any of the preceding claims, wherein the first ceramic material is selected from a group comprising a silica, an yttria zirconia, an alumina, a silicon carbide, a silico-aluminous or a mixture of two or more.

5. The composition according to any of the preceding claims, wherein the photopolymerizable resin is selected from a group comprising monomers and/or oligomers of a type of acrylates, epoxy acrylates, or polyester acrylates or their mixtures.

6. The composition according to any of the preceding claims, wherein the photoinitiator is composed of Diphenyl (2,4,6-Trimethyl Benzoyl) Phosphine Oxide or Phenyl bis (2,4,6-trimethyl benzoyl) phosphine oxide.

7. The composition according to any of the preceding claims, wherein the composition further comprises one or more additives selected from
- non-oxide ceramics comprising cubic boron nitride, hexagonal boron nitride or mixture thereof, or
- from oxide ceramics comprising Yttria, Zirconia, Alumina, or mixture thereof, YAG garnet with composition of Y3Al5O12, or
- from a group comprising metals, metalloids or nonmetallic elements comprising a carbon in a form of Dimond, graphite, or mixture thereof.

8. The composition according any of the preceding claims, wherein the composition further comprises a plasticizer.

9. The composition according any of the preceding claims, wherein the composition comprises
the first ceramic material 3% to 28% by volume;
the photopolymerizable resin 70% to 95% by volume;
the photoinitiator 3% to 28% by volume,
the dispersant 10% to 20% by volume.

10. A ceramic product, the ceramic product comprising
- a first layer formed from a composition according to any of claims 1-9, polymerized by UV exposure;
- a second layer formed from the composition and deposited onto the polymerized first layer, polymerized by UV exposure; and
- one or more subsequent layers, each formed and polymerized in a manner consistent with the first and second layers, arranged according to a preset pattern of the ceramic product.

11. A method of manufacturing a ceramic product by stereolithography, the method comprises
- forming a first layer by depositing a composition according to any of the claims 1-9 on a support and polymerizing the first deposited layer of the composition by using an UV exposure;
- forming a second layer by depositing the composition to the polymerized first layer and polymerizing the second deposited layer of the composition by using the UV exposure;
- forming one or more subsequent layers by repeating forming and polymerizing the first layer and forming and polymerizing the second layer according to a preset pattern of the ceramic product;
- removing the formed layers from the support;
- debonding the formed layers;
- sintering the debonded layers;
- cooling the sintered layers.

12. The method according to claim 11, wherein debonding comprises treating the formed layers at 240°C up to 8h, rising the temperature to 300 °C and keeping at 300 °C up to 8h.

13. The method according to claim 11, wherein sintering comprises
- heating the debonded layers up to a first sintering temperature 900 °C with heating rate of 0.1 to 10C/min, and keeping the heated layers at the first sintering temperature from 1 to 8h;
- rising the temperature up to a second sintering temperature 1200 - 1300 °C by heating rate of 0.1 to 10C/min and keeping at the second sintering temperature for 10min to 8h.

14. The method according to claim 11, wherein cooling comprises
- cooling the sintered layers down from the second sintering temperature to a first cooling temperature 900 °C by rate of 0.1-10C/min, keeping at the first cooling temperature for a first cooling time 10min to 8h;
- after the cooling time is reached cooling the sintered layers down to a second cooling temperature 25 °C by rate of 0.1 to 10C/min, for a second cooling time 10min to 8h.

15. Use of a ceramic product according to any one of claim 10 in applications selected from the group comprising industrial control, power and renewable energy, reactors, cooling solutions in system design; electric vehicles; hybrid electric vehicles; electric traction control; power supply units; photovoltaic applications; converters; inverters; heat exchangers; power electronics; renewable energy systems; electronic applications for air-space industry; thermal management systems; shielding protective armor for spacecrafts; heat sinks or 3D printing of fine ceramics.
